# EUROPÄISCHE PATENTANMELDUNG

(11) **EP 2 746 676 A1**
(43) Veröffentlichungstag der Anmeldung: **25.06.2014**
(21) Anmeldenummer: 13197923.9
(22) Anmeldetag: 18.12.2013
(51) Int. Cl.: F24C 15/00

(54) **Beleuchtungsvorrichtung für ein Gargerät und Gargerät**

(30) Priorität: 19.12.2012 DE 102012223678
(71) Anmelder: BSH Bosch und Siemens Hausgeräte GmbH, 81739 München (DE)
(72) Erfinder: Kellermann, Peter, 84489 Burghausen (DE); Maier, Constantin, 83301 Traunreut (DE)

(57) **Zusammenfassung**

Die vorliegende Erfindung betrifft eine Beleuchtungsvorrichtung (2) für einen Garraum (10) eines Gargerät (1), die zumindest eine Lichtquelle und zumindest einen Lichtleiter (20) umfasst. Die Beleuchtungsvorrichtung (2) ist dadurch gekennzeichnet, dass der mindestens eine Lichtleiter (20) ein längliches Element darstellt und an zumindest einen Teil des Umfangs des Lichtleiters (20) zumindest ein Strukturbereich (21) vorgesehen ist, in dem mindestens eine Struktur (210) eingebracht ist. Weiterhin wird ein Gargerät (1) mit einer Beleuchtungsvorrichtung (2) beschrieben.

## Beschreibung

Die Erfindung betrifft eine Beleuchtungsvorrichtung für ein Gargerät und ein Gargerät.

Zur komfortablen Beobachtung des Garvorgangs in einem Gargerät ist es bekannt, den Garraum eines Gargerätes, wie beispielsweise eines Backofens oder eines Mikrowellengerätes zu beleuchten. Hierzu werden in der Regel in der Decke oder in den Seitenwänden des Garraumgehäuses Beleuchtungsvorrichtungen eingesetzt.

In der DE 10 2006 061 739 A1 wird eine Muffel für einen Backofen beschrieben, bei der Teilräume des Muffelraums durch Lichtleiter ausgeleuchtet werden können. Hierzu sind die Lichtleiter so eingebracht, dass diese jeweils einem Teilbereich zugeordnet sind und diesen ausleuchten. Ein Nachteil dieser Beleuchtungsart besteht darin, dass der Aufbau der Beleuchtungsvorrichtung und damit des Backofens aufwändig ist.

Der vorliegenden Erfindung liegt daher die Aufgabe zugrunde, eine Beleuchtung für den Garraum eines Gargerätes bereitzustellen, die auf einfache Weise und bei einfachem Aufbau ein gezieltes Beleuchten zumindest eines Teils des Garraums ermöglicht.

Der Erfindung liegt die Erkenntnis zugrunde, dass diese Aufgabe gelöst werden kann, indem an einem Lichtleiter zumindest zwei unterschiedliche Oberflächenbereiche geschaffen werden, an denen sich die Abstrahlcharakteristiken des Lichtleiters unterscheiden.

Gemäß einem ersten Aspekt wird die Aufgabe daher gelöst durch eine Beleuchtungsvorrichtung für einen Garraum eines Gargerätes, die zumindest eine Lichtquelle und zumindest einen Lichtleiter umfasst. Die Beleuchtungsvorrichtung ist dadurch gekennzeichnet, dass der Lichtleiter ein längliches Element darstellt und an zumindest einen Teil des Umfangs des Lichtleiters zumindest ein Strukturbereich vorgesehen ist, in dem mindestens eine Struktur eingebracht ist.

Als Gargerät wird erfindungsgemäß insbesondere ein solches Gargerät bezeichnet, das einen verschließbaren Garraum aufweist. Das Gargerät umfasst hierbei zumindest ein Garraumgehäuse, das den Garraum begrenzt. Das Garraumgehäuse selber ist in dem Gargerät vorzugsweise in einem Gerätegehäuse aufgenommen. Das Gerätegehäuse ist hierbei insbesondere so ausgebildet, dass zwischen dem Garraumgehäuse und dem Gerätegehäuse ein Zwischenraum gebildet ist, in dem elektrische und weitere Komponenten des Gargeräts angeordnet sein können. In dem Zwischenraum können Bedingungen herrschen, die sich von den Bedingungen in dem Garraum unterscheiden. Insbesondere kann der Zwischenraum zumindest teilweise gekühlt werden, was beispielsweise durch Luftkühlung erfolgen kann. In dem Zwischenraum kann die Lichtquelle der erfindungsgemäßen Beleuchtungsvorrichtung angeordnet werden und ist somit nicht den Bedingungen im Garraum, insbesondere der hohen Temperatur ausgesetzt. Das Gargerät kann insbesondere ein elektrisches Gargerät darstellen. Das Gargerät kann ein Backofen, ein Dampfgarer beziehungsweise Dampfgargerät, ein Mikrowellengerät oder eine Kombination daraus sein.

Die Wände, die den Garraum begrenzen, sind insbesondere Seitenwände, Rückwand, Decke und Boden des Garraumgehäuses. Nach vorne wird der Garraum des Gargeräts von einer Türe des Gargeräts verschlossen. Der Garraum ist vorzugsweise ein ungeteilter Raum. Durch Installationen, wie beispielsweise Halter oder Schienen für Gargutträger, wie insbesondere Backbleche oder Roste, kann der Garraum in verschiedene Ebenen unterteilt werden, die als Garraumebenen bezeichnet werden.

Als Lichtquelle wird eine Vorrichtung bezeichnet, an der Licht erzeugt wird. Die Lichtquelle wird im Folgenden auch als Leuchtmittel bezeichnet. Die Lichtquelle kann beispielsweise eine Glühlampe, eine Halogenlampe oder eine Leuchtdiode (LED) sein.

Als Lichtleiter wird erfindungsgemäß ein Element bezeichnet, das Licht, das in dieses eingekoppelt wird, an einem von dem Einkopplungsort entfernten Ort abgibt, abstrahlt beziehungsweise emittiert. Zu diesem Zweck ist der Lichtleiter aus einem Material hergestellt, das zur Leitung von Licht, insbesondere von Lichtwellen, geeignet ist. Der Lichtleiter kann beispielsweise ein Glaselement oder Kunststoffelement, insbesondere Glasfaserelement oder Kunststofffaserelement darstellen. Der Lichtleiter oder die Lichtleiter sind zur Lichteinkopplung mit der Lichtquelle verbunden.

Erfindungsgemäß stellt der Lichtleiter ein längliches Element dar. Als längliches Element wird vorzugsweise ein Element bezeichnet, das eine Längsabmessung aufweist, die größer ist als die weiteren Abmessungen, insbesondere Breite und Tiefe, des Elementes. Insbesondere kann der Lichtleiter daher eine Stabform aufweisen. Vorzugsweise ist der Lichtleiter in zumindest einem Teilbereich dessen Länge starr. Die dafür erforderliche Festigkeit kann durch das Material des Lichtleiters selber oder durch eine entsprechende Stützung geschaffen werden.

Erfindungsgemäß kann die Beleuchtungsvorrichtung mindestens einen Lichtleiter umfassen. Besonders bevorzugt umfasst die Beleuchtungsvorrichtung aber mindestens zwei Lichtleiter oder ein Lichtleiter wird so geführt, dass dieser in mindestens zwei Bereichen Licht an den Garraum des Gargerätes abgeben kann. Zur besseren Lesbarkeit wird im Folgenden im Wesentlichen auf einen Lichtleiter Bezug genommen. Die Ausführungen zu dem einen Lichtleiter gelten aber- soweit anwendbar- ebenfalls für mehrere Lichtleiter. Der oder die Lichtleiter wird / werden erfindungsgemäß in der Beleuchtungsvorrichtung und dem Gargerät so geführt, dass zumindest ein Bereich des Lichtleiters im montierten Zustand der Beleuchtungsvorrichtung in dem Garraum liegt oder an diesen angrenzend angeordnet ist. Der Bereich des Lichtleiters, an dem dieser in dem Garraum liegt oder an diesen angrenzend angeordnet ist, wird auch als Beleuchtungsbereich bezeichnet.

Erfindungsgemäß ist an zumindest einen Teil des Umfangs des Lichtleiters zumindest ein Strukturbereich vorgesehen, in dem mindestens eine Struktur eingebracht ist. Als Umfang des Lichtleiters wird hierbei die Außenseite des Lichtleiters bezeichnet, die parallel zu der Längsachse des Lichtleiters liegt. Bei einem recheckigen Querschnitt wird der Umfang daher durch die vier Flächen, die das Rechteck begrenzen, gebildet. Bei einem runden oder ovalen Querschnitt stellt der Umfang die Mantelfläche des Lichtleiters dar.

Über zumindest einen Teil des Umfangs ist erfindungsgemäß ein Strukturbereich vorgesehen, in dem mindestens eine Struktur eingebracht ist. Der Strukturbereich kann sich somit über den gesamten Umfang des Lichtleiters erstrecken. Vorzugsweise ist der Strukturbereich aber nur über einen Teil des Umfangs vorgesehen. Hierdurch kann beispielsweise ein Abstrahlen von Licht von dem Lichtleiter in zumindest eine Richtung fokussiert, gerichtet und/oder in mindestens eine Richtung verringert oder ganz unterbunden werden.

Als an zumindest einen Teil des Umfangs des Lichtleiters vorgesehener Strukturbereich wird erfindungsgemäß ein Bereich bezeichnet, in dem mindestens eine Struktur zumindest in der Oberfläche des Lichtleiters vorliegt und vorzugsweise die Oberflächenbeschaffenheit des Lichtleiters in diesem Bereich verändert. Vorzugsweise ist die Struktur so vorgesehen, dass durch das Einbringen der Struktur ein Lichtauslass, das heißt ein Abstrahlen von Licht von dem Lichtleiter an der Struktur ermöglicht wird.
Vorzugsweise wird das Abstrahlen des Lichts durch die Struktur zusätzlich gerichtet. Dies kann insbesondere durch die Tiefe der Struktur und den Abstand zwischen einzelnen eine Struktur bildenden Strukturelementen erzielt werden. Die Struktur stellt vorzugsweise eine von außen in zumindest die Oberfläche des Lichtleiters eingebrachte Struktur verstanden. Somit unterscheidet sich die vorliegende Erfindung von Lichtleitern, bei denen im Inneren einzelner Fasern mikroskaligen Störungen eingebracht sind. Bei den erfindungsgemäß verwendeten Lichtleitern wird dadurch zum einen die Lagerhaltung verringert und die Erzeugung der Struktur kann auf einfachere Weise und benutzungsabhängig erfolgen.

Indem erfindungsgemäß ein Lichtleiter verwendet wird, bei dem an zumindest einem Teil des Umfangs ein Strukturbereich eingebracht ist, kann ein gezieltes Beleuchten beziehungsweise Ausleuchten zumindest eines Teils des Garraumes erreicht werden. Somit kann die Abstrahlcharakteristik des Lichtleiters an dem Lichtleiter selber eingestellt werden und der Aufbau der Beleuchtungsvorrichtung und damit des Gargerätes vereinfacht werden.

Der Strukturbereich kann erfindungsgemäß den gesamten Umfang des Lichtleiters abdecken. Vorzugsweise ist der Strukturbereich aber nur über einen Teil des Umfangs des Lichtleiters vorgesehen. Hierdurch kann die Lichtmenge, die über den Umfang abgegeben werden kann, auf den Strukturbereich konzentriert werden, in dem die Struktur eingebracht ist. Dadurch kann eine Erhöhung der Leuchtstärke ohne Änderung der Lichtquelle erfolgen. Der Bereich, in dem die Struktur eingebracht ist, wird erfindungsgemäß auch als Strukturbereich oder Abstrahlbereich bezeichnet. Sind an einem Lichtleiter mehrere Strukturbereiche vorgesehen, kann die Struktur in den einzelnen Bereichen unterschiedlich zueinander sein. Allerdings ist es auch möglich in mehreren Strukturbereichen jeweils die gleiche Struktur einzubringen.

Die Struktur oder die Strukturen, die in dem Strukturbereich in die Oberfläche des Lichtleiters eingebracht sind, können unterschiedliche Formen aufweisen und bestehen beispielsweise aus Strukturelementen, wie Nuten, Erhebungen und/oder Schlitzen. Die Strukturelemente können sich auch miteinander schneiden, so dass als Struktur beispielsweise ein Gitter oder anderes Muster bestehend aus Nuten oder Schlitzen mit Erhebungen gebildet sein kann. Gemäß einer Ausführungsform ist es aber auch möglich statt einzelner Strukturelemente eine Struktur in einem Bereich einzubringen, indem beispielsweise die Oberfläche des Bereiches aufgeraut wird. Ein solcher Bereich oder solche Bereiche können erfindungsgemäß beispielsweise durch Strahlen, wie beispielsweise Standstrahlen, eingebracht werden. Der Vorteil von Strukturbereichen, in denen einzelne Strukturelemente vorgesehen sind, das heißt bei dem der Strukturbereich durch das Einbringen einzelner Strukturelemente erzeugt wird, liegt insbesondere darin, dass die Abmessungen und Verteilungen sowie Ausrichtungen der einzelnen Strukturelemente auf einfache Weise gezielt eingestellt werden kann. Beispielsweise kann der Abstand zwischen Nuten unterschiedlich groß gewählt werden und/oder die Tiefe und/oder der Winkel der Nuten unterschiedlich eingestellt werden. Hierdurch wird kann Abstrahlcharakteristik gezielt eingestellt werden. Der Vorteil des Einbringen eines Strukturbereiches, beispielsweise durch Strahlen, besteht insbesondere in der einfachen Herstellung.

Gemäß einer Ausführungsform ist der mindestens eine Strukturbereich im Endbereich des Lichtleiters vorgesehen. Als Endbereich des Lichtleiters wird der Bereich bezeichnet, der an das freie Ende des Lichtleiters angrenzt. Das freie Ende eines länglichen Lichtleiters bezeichnet hierbei das Ende, das dem Ende gegenüber liegt, an dem das Licht in den Lichtleiter eingekoppelt wird. In der Regel wird das freie Ende oder zumindest der daran angrenzende Endbereich in den Garraum eingebracht oder zu diesem angrenzend angeordnet, um den Garraum zu beleuchten. Indem der mindestens eine Strukturbereich nur in dem Endbereich des Lichtleiters vorgesehen ist, kann ein ungewolltes Abstrahlen von Licht außerhalb des Garraums somit verhindert werden. Der Strukturbereich oder die Strukturbereiche können erfindungsgemäß zu dem freien Ende des Lichtleiters beabstandet in dem Endbereich vorgesehen sein. Der Beleuchtungsbereich, in dem der Lichtleiter in dem Garraum oder angrenzend zu dem Garraum angeordnet ist, kann daher ebenfalls von dem freien Ende des Lichtleiters beabstandet sein und das freie Ende kann beispielsweise zur Halterung des Lichtleiters an dem Garraumgehäuse verwendet werden.

Vorzugsweise ist der mindestens eine Strukturbereich nur an einer Seite des Lichteleiters vorgesehen. Als Seite des Lichtleiters wird hierbei die Teilfläche des Umfangs des Lichtleiters verstanden, die bei senkrechter Projektion auf die Länge des Lichtleiters sichtbar ist. Bei einem Lichtleiter mit rechteckigem Querschnitt stellt eine Seite daher beispielsweise eine Seitenfläche des Rechtecks dar. Bei einem Lichtleiter mit rundem Querschnitt kann als Seite eine Hälfte der Mantelfläche bezeichnet werden. Indem der Strukturbereich nur an einer Seite des Lichtleiters vorgesehen ist, kann der Lichtleiter zur Ausleuchtung des Garraums an einer Garraumgehäusewand angeordnet werden, wobei die Seite, in der der oder die Strukturbereiche vorgesehen sind, der Garraumgehäusewand entweder zugewandt oder abgewandt sein kann.

Bei der Ausführungsform, bei der nur an einer Seite des Lichtleiters mindestens ein Strukturbereich eingebracht ist, ist der Strukturbereich nicht notwendiger Weise an der gesamten Seite des Lichtleiters vorgesehen. Wie bereits beschrieben, ist vorzugsweise nur der Bereich, der an das freie Ende des Lichtleiters angrenzt, mit Strukturbereichen versehen. Zudem kann auch in Umfangsrichtung nur ein Teil der einen Seite des Lichtleiters mit einer oder mehreren Strukturen versehen sein. Bei einem Lichtleiter mit rechteckigem Querschnitt weist der Strukturbereich dabei beispielsweise eine geringere Breite auf, als die Seitenfläche des Rechtecks, in der der Strukturbereich eingebracht ist. Bei einem runden Querschnitt kann der Strukturbereich beispielsweise nur ein Viertel der Mantelfläche des runden Lichtleiters abdecken.

Zusätzlich oder alternativ zu der Begrenzung des Strukturbereiches in Umfangsrichtung sind bei einem Lichtleiter, der mehrere Strukturbereiche aufweist, die Strukturbereiche vorzugsweise in Abständen zueinander über zumindest einen Teil der Länge des Lichtleiters verteilt. Zwischen den Strukturbereichen liegen Bereiche, in denen keine Struktur eingebracht ist und die auch als unbehandelte Bereiche bezeichnet werden können. Somit kann die Menge der Lichtabgabe über die Länge des Lichtelementes an unterschiedlichen Stellen unterschiedlich eingestellt werden. Besonders bevorzugt erfolgt in den unbehandelten Bereichen zwischen den Strukturbereichen keine Lichtabstrahlung. Diese Bereiche können zu diesem Zweck poliert sein. Die Ausführungsform, bei der Strukturbereiche über die Länge des Lichtleiters verteilt vorgesehen sind, weist den Vorteil auf, dass bei einem vertikal in einem Garraum angeordneten Lichtleiter unterschiedliche Ebenen in dem Garraum, die auch als Garebenen bezeichnet werden, mit einem einzigen Lichtleiter beleuchtet werden können. Indem in den zwischen den Strukturbereichen vorgesehenen Bereichen keine Lichtabstrahlung erfolgt, kann das Licht verlustfrei zwischen den Strukturbereichen geleitet werden und damit kann eine zuverlässige Ausleuchtung der einzelnen Garebenen sicher gestellt werden.

Gemäß einer Ausführungsform sind mindestens zwei Strukturbereiche an den Lichtleiter eingebracht und die Strukturen der mindestens zwei Strukturbereiche unterscheiden sich. Die Strukturen können sich durch die Art der Struktur oder Strukturelemente oder durch die Eigenschaften der Struktur oder Strukturelemente unterscheiden. Beispielsweise können in einem Strukturbereich Nuten oder Schlitze in einem ersten Abstand zueinander eingebracht sein und in einem weiteren Strukturbereich können die Nuten oder Schlitze in einem zweiten Abstand zueinander eingebracht sein, wobei der zweite Abstand größer ist, als der erste Abstand. Hierdurch wird in dem ersten Strukturbereich beispielsweise eine größere Lichtmenge abgegeben als in dem zweiten Strukturbereich. Auch die Tiefe der Nuten kann beispielsweise zu diesem Zweck zwischen den einzelnen Strukturbereichen variieren. Durch die unterschiedlichen Lichtmengen, die durch die unterschiedlichen Strukturen in den Strukturbereichen abgegeben werden können, kann die Verteilung der Ausleuchtung in dem Garraum homogenisiert werden. Beispielsweise ist es daher möglich, dass die Struktur in einem Strukturbereich, der in der Nähe des freien Endes des Lichtleiters vorgesehen ist, so gewählt wird, dass die Lichtmenge, die über diesen abgegeben werden kann höher ist als in Bereichen, die zu dem freien Enden und weiter beabstandet sind. Hierdurch kann sicher gestellt werden, das Licht, das von einer Lichtquelle in den Lichtleiter eingekoppelt wird, den Lichtleiter nicht bereits an dem ersten, das heißt von freien Ende am weitesten entfernten Strukturbereich, vollständig verlässt, sonder auch an dem Strukturbereich in der Nähe des freien Endes eine gewisse, vorzugsweise die gleiche Lichtmenge von dem Lichtleiter abgegeben werden kann.

Gemäß einer Ausführungsform umfasst die Beleuchtungsvorrichtung mindestens einen Reflektor und der Reflektor ist zu dem Lichtleiter so angeordnet, dass der mindestens eine Strukturbereich dem Reflektor zugewandt ist.

Bei dieser Ausführungsform kann eine indirekte Beleuchtung des Garraumes durch das von dem Reflektor abgestrahlte Licht erfolgen. Ein Blenden des Benutzers des Gargerätes kann hierbei verhindert werden und zudem kann durch die indirekte Beleuchtung eine homogene Ausleuchtung des Garraumes erzielt werden. Bei der Ausführungsform, bei der der mindestens eine Strukturbereich nur in einer Seite des Lichtleiters vorgesehen ist, kann beim Vorsehen eines Reflektors und Ausrichtung des Strukturbereiches zu dem Reflektor der weitere Vorteil erzielt werden, dass eine ebene Fläche des Lichtleiters dem Garraum zugewandt ist. Aus diesem Grund kann der Lichtleiter selber zur Abdeckung eines Beleuchtungsraums, der durch den Reflektor definiert wird, dienen und auf eine gesonderte, insbesondere Glasabdeckung verzichtet werden. Hierdurch wird der Aufbau der Beleuchtungsvorrichtung und damit des Gargerätes weiter vereinfacht.

Alternativ kann die Beleuchtungsvorrichtung einen Reflektor umfassen und der Reflektor zu dem Lichtleiter so angeordnet sein, dass der mindestens eine Strukturbereich dem Reflektor abgewandt ist. Bei dieser Ausführungsform kann durch den Reflektor ein ungewünschtes Auskoppeln von Licht an der Seite des Lichtleiters, in der keine Strukturbereiche eingebracht sind, verhindert werden, beziehungsweise das so ausgekoppelte Licht über den Reflektor zurück in den Lichtleiter und den Garraum geleitet werden.

Gemäß einer Ausführungsform weist der Lichtleiter einen rechteckigen Querschnitt auf und stellt vorzugsweise ein Flachmaterial dar. Bei dieser Form des Lichtleiters ist zum einen das Einbringen zumindest eines Strukturbereiches auf der Vorderseite oder Rückseite des Lichtleiters besonders einfach, da es sich bei diesen Seiten um ebene Flächen handelt. Zum anderen kann bei dieser Ausführungsform auch auf das Vorsehen einer separaten Abdeckung des Lichtleiters beispielsweise durch eine Glasabdeckung verzichtet werden, da die Seite des Lichtleiters, in dem kein Strukturbereich vorgesehen ist, eine ebene und glatte Oberfläche darstellt und daher selber als Abdeckung des Beleuchtungsraums dienen kann. Besonders bevorzugt entsprechen die Breite des Lichtleiters und die Länge des Beleuchtungsbereiches des Lichtleiters bei dieser Ausführungsform daher der Breite und Länge einer Aufnahme für den Lichtleiter, beispielsweise einer Vertiefung in einer Garraumgehäusewand.

Alternativ ist es aber auch möglich, dass der Lichtleiter einen anderen Querschnitt, beispielsweise einen runden oder einen ovalen Querschnitt aufweist. Diese Lichtleiter weisen den Vorteil auf, dass sie zum einen einfach herzustellen sind und zum anderen eine Durchlassöffnung, die in einer Garraumgehäusewand für den Durchlass des Lichtleiters vorzusehen ist, klein gehalten und leicht abgedichtet werden kann, beispielsweise durch einen Dichtring.

Gemäß einer Ausführungsform ist die Struktur in dem mindestens einen Strukturbereich durch Ätzen, Laserbehandlung, Fräsen oder Strahlen in den Lichtleiter eingebracht. Als Strahlen wird hierbei ein Verfahren bezeichnet, bei dem die Oberfläche des Lichtleiters in dem Strukturbereich mit einem abrasiven Medium bestrahlt wird. Die Erfindung ist nicht auf diese Herstellungsarten beschränkt. Vielmehr kann jede Art des Einbringens einer Struktur verwendet werden, mit der es möglich ist, die Tiefe und gegebenenfalls den Abstand zwischen einzelnen Strukturenelementen gezielt einzustellen.

Gemäß einer Ausführungsform ist zumindest ein Teil der Bereiche, in denen keine Struktur vorgesehen ist poliert. Dies können insbesondere die Ränder oder Seitenflächen des Lichtleiters sein. Durch das Polieren dieser Bereiche kann eine ungewollte Lichtauskopplung an den Rändern vermieden werden. Zudem kann die Lichteintrittsfläche des Lichtleiters poliert sein. Diese Fläche, die dem freien Ende des Lichtleiters gegenüberliegt, ist mit der Lichtquelle verbunden und dient der Einkopplung des von der Lichtquelle abgegebenen Lichts in den Lichtleiter. Da Unebenheiten an dieser Fläche zu einer Verringerung der Lichtmenge führt, die in den Lichtleiter eingekoppelt werden kann, ist das Polieren dieser Fläche des Lichtleiters bevorzugt.

Gemäß einem weiteren Aspekt betrifft die vorliegende Erfindung ein Gargerät das dadurch gekennzeichnet ist, dass dieses zumindest eine erfindungsgemäße Beleuchtungsvorrichtung aufweist.

Vorteile und Merkmale, die bezüglich der erfindungsgemäßen Beleuchtungsvorrichtung beschrieben werden oder wurden, gelten - soweit anwendbar - ebenfalls für das erfindungsgemäße Gargerät und umgekehrt.

Gemäß einer bevorzugten Ausführungsform dient der Lichtleiter zur Abdeckung einer Aufnahme für zumindest den Lichtleiter. Die Aufnahme, die zur Aufnahme von zumindest dem Beleuchtungsbereich des Lichtleiters dient, kann eine Vertiefung in einer Garraumgehäusewand darstellen und kann auch als Beleuchtungsraum bezeichnet werden. In der Aufnahme kann ein Reflektor, beispielsweise ein Reflektorblech, aufgenommen sein.

Gemäß einer weiteren Ausführungsform ist der Lichtleiter in der Beleuchtungsvorrichtung in dem Gargerät vertikal angeordnet. Vorzugsweise liegen dabei jeweils die Teile des Lichtleiters, in denen ein Strukturbereich an der Oberfläche vorgesehen ist, in den Garebenen des Gargerätes. Als Garebenen werden hierbei Teilräume in dem Garraum bezeichnet, die durch einen Gargutträger voneinander getrennt sind oder getrennt werden können.

Das Gargerät kann einen Backofen, ein Mikrowellengerät oder eine Kombination, insbesondere einen Mikrowellenofen darstellen.

Die Erfindung wird im Folgenden erneut unter Bezugnahme auf die beiliegenden Zeichnungen erläutert. Es zeigen:
Figur 1: eine schematische perspektivische Frontansicht einer Ausführungsform des erfindungsgemäßen Gargerätes im Bereich des Garraumgehäuses ;
Figur 2: eine schematische perspektivische Ansicht eines Teils eines Lichtleiters einer Ausführungsform der erfindungsgemäßen Beleuchtungsvorrichtung;
Figur 3: eine schematische Schnittdarstellung durch eine Ausführungsform eines Teils der erfindungsgemäßen Beleuchtungsvorrichtung; und
Figur 4: eine schematische Schnittdarstellung durch eine weitere Ausführungsform eines Teils der erfindungsgemäßen Beleuchtungsvorrichtung.

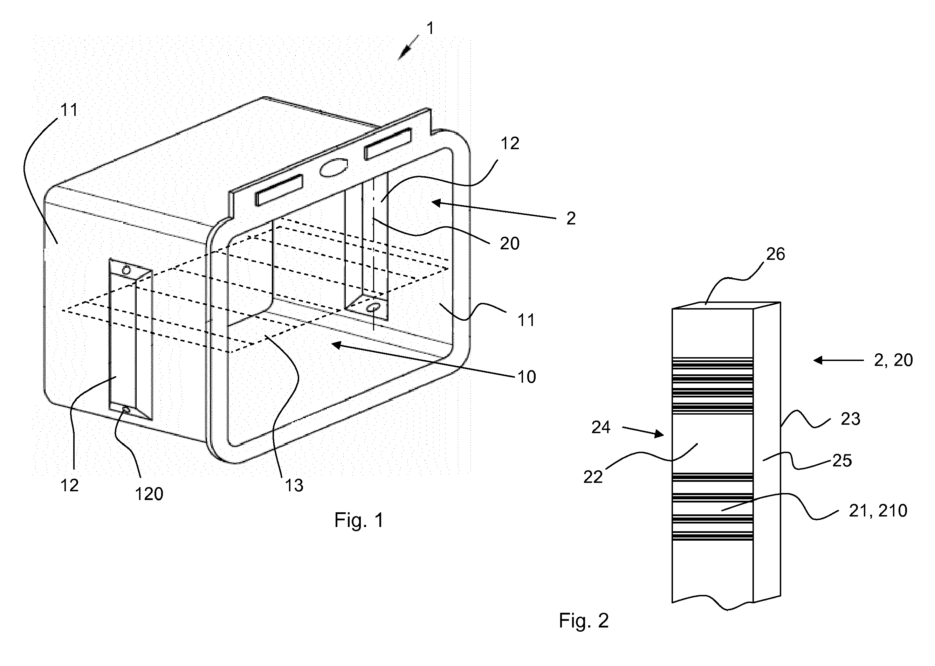

In Figur 1 ist eine perspektivische Frontansicht eines Teils einer Ausführungsform des erfindungsgemäßen Gargeätes 1 gezeigt. Das Gargerätegehäuse, das das dargestellte Garraumgehäuse umgibt, ist in der Figur 1 nicht dargestellt. Die Beleuchtungsvorrichtung 2 ist in der Figur 1 nur schematisch angedeutet, wobei ein Lichtleiter 20 durch die strichpunktierte Linie in Figur 1 angedeutet ist.

Der Lichtleiter 20 der Beleuchtungsvorrichtung 2, ist in der in Figur 1 gezeigten Ausführungsform in der Vertikalen in der Seitenwand 11 des Garraumgehäuses, das den Garraum 10 umgibt, eingebracht. In der gegenüber liegenden Seitenwand 11 ist ebenfalls ein Lichtleiter 20 (in Figur 1 nicht sichtbar) eingebracht. Der Lichtleiter 20 ist in eine Vertiefung 12 in der jeweiligen Garraumgehäusewand 11 aufgenommen. Wie an der Vertiefung 12 in der linken Seitenwand 11 zu erkennen ist, sind in den Stirnseiten der Vertiefung 12 Lichtleiterdurchlässe 120 vorgesehen. In der dargestellten Ausführungsform ist in jeder Stirnseite jeder Vertiefung ein Lichtleiterdurchlass 120 eingebracht. Durch diese Lichtleiterdurchlässe 120 kann in jede Vertiefung 12 ein Lichtleiter 20 geführt werden. Diese weisen vorzugsweise eine Länge auf, die zumindest der Länge der Vertiefung 12 entspricht und besonders bevorzugt größer ist als die Länge der Vertiefung 12 ist. Eines der Enden jedes der Lichtleiter 20 wird mit einer Lichtquelle (nicht gezeigt) direkt oder über weitere Komponenten verbunden. Der Bereich des Lichtleiters 20, der in der Vertiefung 12 liegt, stellt den Beleuchtungsbereich des Lichtleiters 20 dar.

In Figur 2 ist eine bevorzugte Ausführungsform eines Lichtleiters 20 der Beleuchtungsvorrichtung 2 gezeigt, der gemäß der vorliegenden Erfindung ausgestaltet ist. Der Lichtleiter 20 weist in der dargestellten Ausführungsform einen rechteckigen Querschnitt auf. Die Rückseite 23, die Seitenflächen 25 und die Stirnseite 26 am freien Ende des Lichtleiters 20 stellen in der gezeigten Ausführungsform ebene Flächen mit einer glatten Oberfläche dar. Die Vorderseite 24 des Lichtleiters 20 stellt ebenfalls eine ebene Fläche dar. Allerdings sind in diese Fläche Strukturen 210 eingebracht. Die Strukturen 21 sind in Strukturbereichen 21 vorgesehen, die nur Teilbereichen der Vorderseite 24 bedecken. Zwischen den Strukturbereichen 21, in denen die Strukturen 210 vorgesehen sind, liegt ein unbehandelter Bereich 22. In der dargestellten Ausführungsform ist auch zwischen dem oberen Strukturbereich 21 und dem freien Ende ein unbehandelter Bereich 22 vorgesehen. In der dargestellten Ausführungsform ist der Abstand zwischen den einzelnen Strukturelementen der Struktur 210 in dem obere Strukturbereich 21 kleiner als in dem unteren Strukturbereich 21.

Ein so ausgestalteter Lichtleiter 20 kann vorzugsweise vertikal in einem Garraum 10 eines Gargerätes 1 eingesetzt werden. Hierbei kann der Lichtleiter 20 beispielsweise wie in Figur 1 gezeigt, in eine Vertiefung 120 in einer Garraumgehäusewand 12 eingebracht werden. Die Durchlassöffnungen 120 sind dann vorzugsweise ebenfalls rechteckig ausgestaltet. Es ist aber auch möglich den Lichtleiter 20 an die Garraumgehäusewand 12 anzulegen, ohne, dass eine Vertiefung hierfür vorgesehen sein muss. Der Lichtleiter 20 nach Figur 2 wird in der Vertikalen so positioniert, dass die Strukturbereiche 21 in den Garraumebenen des Garraums 10 liegen. Die obere Garebene kann beispielsweise durch die Decke des Garraums 10 nach oben und einen in den Garraum 10 eingebrachten Gargutträger 13 nach unten begrenzt werden. Die untere Garebene kann hingegen nach oben durch den Gargutträger 13 und nach unten durch den Boden des Garraums 10 begrenzt werden. Somit können mittels eines einzigen Lichtleiters 20 beide Garraumebenen zuverlässig beleuchtet werden. Sind mehr als zwei Garraumebenen in einem Garraum 10 vorgesehen, so wird vorzugsweise ein Lichtleiter 20 mit der entsprechenden Anzahl von Strukturbereichen 21, beispielsweise drei oder vier, verwendet. Weiterhin ist vorzugsweise in dem Gargerät 1, wie in der Figur 1 gezeigt an jeder Seitenwand 11 des Garraums 10 ein Lichtleiter 20 vorgesehen.

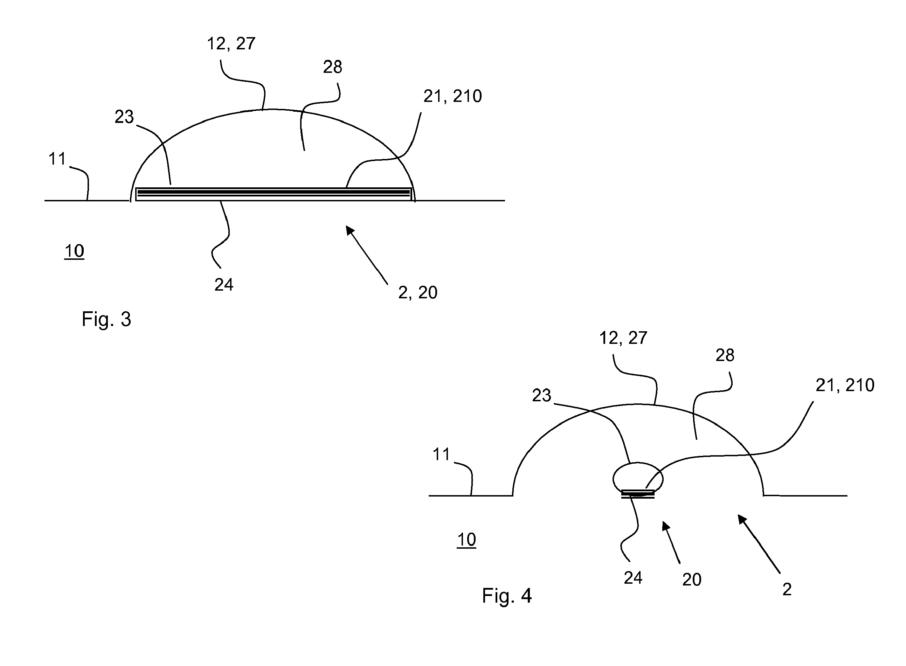

In der Figur 3 ist eine schematische Schnittansicht einer Ausführungsform einer Beleuchtungsvorrichtung 2 gezeigt. Von der Beleuchtungsvorrichtung 2 ist in der Figur 3 der Lichtleiter 20 und ein dem Lichtleiter 20 zugeordneter Reflektor 27 zu sehen. Der Lichtleiter 20 ist auch bei dieser Ausführungsform mit einer Lichtquelle (nicht gezeigt) zur Einkopplung von Licht in den Lichtleiter 20 verbunden.

Der Reflektor 27 ist in der gezeigten Ausführungsform nach Figur 3 in einer Vertiefung 12 der Garraumgehäusewand 11 aufgenommen und weist in der gezeigten Ausführungsform die gleiche Form, wie die Vertiefung 12 auf. In Figur 3 ist dies eine gewölbte Form oder Rinnenform. An der offenen Seite der Vertiefung 12 und des Reflektors 27 ist der Lichtleiter 20 eingesetzt. Der Lichtleiter 20 wird in dieser Ausführungsform aus einem Flachmaterial gebildet. Die Vorderseite 24 des Lichtleiters 20 ist dem Garraum 10 zugewandt und verdeckt vorzugsweise die offene Seite der Vertiefung 12 und des Reflektors 27 vollständig. Die Vorderseite 24 ist in dieser Ausführungsform als ebene, glatte Oberfläche ausgestaltet. Die Seitenflächen 25 des Lichtleiters 20 können hierbei an dem Reflektor 27 oder der Vertiefung 12 anliegen. Es ist aber auch möglich, dass zwischen dem Lichtleiter 12 und dem Reflektor 27 oder der Vertiefung 12 eine Dichtung (nicht gezeigt) eingebracht ist. An der Rückseite 23 des Lichtleiters 20 ist zumindest ein Strukturbereich 21 eingebracht. Durch die in diesem Strukturbereich 21 vorgesehene Struktur 210 wird Licht, das von der Lichtquelle in den Lichtleiter 20 eingekoppelt wurde, von dem Lichtleiter 20 abgestrahlt. Das so abgegebene Licht tritt in den durch den Reflektor 27 begrenzten Beleuchtungsraum 28 ein und wird in den Lichtleiter zurückgeleitet und tritt von dort in den Garraum 10 des Gargerätes ein.

In Figur 4 ist eine weitere Ausführungsform einer erfindungsgemäßen Beleuchtungsvorrichtung 2 gezeigt. In dieser Ausführungsform weist der Lichtleiter 20 einen ovalen Querschnitt auf. Zudem ist im Gegensatz zu der Ausführungsform nach Figur 3 die Struktur 210 in mindestens einem Strukturbereich 21 an der Vorderseite des Lichtleiters 20 eingebracht. Weiterhin ist in der dargestellten Ausführungsform die offene Seite des Reflektors 27 und der Vertiefung 12 nicht vollständig durch den Lichtleiter 20 abgedeckt. Bei dieser Ausführungsform kann eine Abdeckung beispielsweise Glasabdeckung verwendet werden, um den Beleuchtungsraum 28 zu dem Garraum 10 hin abzudecken. Bei der in Figur 4 gezeigten Ausführungsform kann das von der nicht gezeigten Lichtquelle in den Lichtleiter 20 eingekoppelte Licht über die Struktur 21 unmittelbar in den Garraum 10 gelangen. Der Reflektor 27 dient bei dieser Ausführungsform im Wesentlichen dazu ungewollte Auskopplungen von Licht an anderen Stellen des Lichtleiters 20, beispielsweise an der Rückseite 23 des Lichtleiters 20, zu verhindern beziehungsweise das so abgegebene Licht in den Garraum 10 zu leiten.

Die vorliegende Erfindung ist nicht auf die dargestellten Ausführungsformen beschränkt. Insbesondere kann die Form und Größe des Lichtleiters von den Gezeigten abweichen. Beispielsweise kann die Breite des Lichtleiters nach Figur 3 geringer sein als die Breite der offenen Seite des Reflektors und der Vertiefung. Entsprechend kann beispielsweise die Breite und/oder Tiefe des Lichtleiters nach Figur 4 breiter als die Dargestellte sein und beispielsweise der Breite der offenen Seite des Reflektors und der Vertiefung entsprechen.

Auch die Form des Reflektors und der Vertiefung, sofern diese überhaupt vorgesehen sind, können von den Gezeigten abweichen. So kann beispielsweise die Vertiefung eine Kastenform darstellen. In dieser kann ein rinnenförmig gebogener oder ebenfalls ein kastenförmiger Reflektor vorgesehen sein. Es ist weiterhin möglich den Reflektor nicht als separates Bauteil vorzusehen sondern eine reflektierende Beschichtung unmittelbar auf dem Lichtleiter oder auf der Vertiefung aufzubringen.

Die vorliegende Erfindung und einige vorteilhafte Ausgestaltungen lassen sich wie folgt zusammenfassen. Es wird ein Lichtleiter, beispielsweise in rechteckiger Form, das heißt aus Flachmaterial verwendet, in den auf zumindest einem Teil der Oberfläche Strukturen eingebracht sind, durch die eine Lichtauskopplung in Richtung des Garraums erzielt wird. Vorzugsweise ist die Lichtmenge durch die Ausführung der Struktur in Tiefe und Abstand auch innerhalb der Ebenenbereiche beeinflusst. Der Abstand des Lichtaustritts, der ebenenabhängig ist, wird dadurch realisiert, dass die Strukturen nur in bestimmten Bereichen des Lichtleiters ausgeführt werden. In den Zwischenräumen wird das Licht nahezu verlustfrei geleitet. Zur Vermeidung von ungewollten Lichtauskopplungen an den Rändern des Lichtleiters werden diese poliert. Zur besseren Lichteinkopplung wird die Lichteintrittsfläche ebenfalls poliert. Eine ungewollte Auskopplung an der Rückseite wird durch einen Reflektor, der direkt am Lichtleiter beziehungsweise an dem Lichtleiterträger angebracht ist, vermieden. Die Strukturen werden zur besseren Lichtausbeute an der vom Garraum abgewandten Seite auf- beziehungsweise eingebracht. Aufgrund der dadurch dem Garraum zugewandten glatten Seite kann auf eine zusätzliche Abdeckung der Leuchte verzichtet werden.

Die vorliegende Erfindung weist eine Reihe von Vorteilen auf. Zum einen kann das Leuchtmittel, das heißt die Lichtquelle, wie beispielsweise eine LED im kühlen Bereich des Gargerätes angeordnet sein. Weiterhin ist bei einer glatten dem Garraum zugewandten Oberfläche eine Glasabdeckung nicht erforderlich. Ferner kann mit der vorliegenden Erfindung eine ebenenabhängige Einstrahlung mit einem einzigen Lichtleiter erzielt werden. Die Leuchtstärke kann durch die Struktur, insbesondere deren Tiefe und Abstand beeinflusst werden. Durch die flache Form des Lichtleiters, bei der Ausführungsform, bei der dieser aus einem Flachmaterial hergestellt ist, ist ein Ausschnitt einer Isolation, die zwischen der Garraumgehäusewand und der diese umgebenden Gerätegehäusewand, das heißt in dem Zwischenraum vorgesehen sein kann, nicht erforderlich. Der Lichtleiter, gegebenenfalls mit Reflektor kann vielmehr ohne Ausschnitt zwischen Beleuchtung und Gerätegehäusewand eingebracht werden, was zu einer Energieeinsparung führt.

### BEZUGSZEICHENLISTE

- 1: Gargerät
- 10: Garraum
- 11: Garraumgehäusewand
- 12: Vertiefung
- 120: Durchlassöffnung
- 13: Gargutträger

- 2: Beleuchtungsvorrichtung
- 20: Lichtleiter
- 21: Strukturbereich
- 22: unbehandelter Bereich
- 23: Rückseite
- 24: Vorderseite
- 25: Seitenfläche
- 26: freies Ende

- 27: Reflektor
- 28: Beleuchtungsraum

## Patentansprüche

1. Beleuchtungsvorrichtung (2) für einen Garraum (10) eines Gargerät (1), die zumindest eine Lichtquelle und zumindest einen Lichtleiter (20) umfasst, **dadurch gekennzeichnet, dass** der mindestens eine Lichtleiter (20) ein längliches Element darstellt und an zumindest einen Teil des Umfangs des Lichtleiters (20) zumindest ein Strukturbereich (21) vorgesehen ist, in dem mindestens eine Struktur (210) eingebracht ist.

2. Beleuchtungsvorrichtung nach Anspruch 1, **dadurch gekennzeichnet, dass** der mindestens eine Strukturbereich (21) im Endbereich des Lichtleiters (20) vorgesehen ist.

3. Beleuchtungsvorrichtung nach einem der Ansprüche 1 oder 2, **dadurch gekennzeichnet, dass** der mindestens eine Strukturbereich (21) an nur einer Seite (24) des Lichteleiters (20) vorgesehen ist.

4. Beleuchtungsvorrichtung nach einem der Ansprüche 1 bis 3, **dadurch gekennzeichnet, dass** mehrere Strukturbereiche (21) vorgesehen sind und die Strukturbereiche (21) in Abständen zueinander über zumindest einen Teil der Länge des Lichtleiters (20) verteilt sind.

5. Beleuchtungsvorrichtung nach einem der Ansprüche 1 bis 4, **dadurch gekennzeichnet, dass** mindestens zwei Strukturbereiche (21) an den Lichtleiter (20) eingebracht sind und die Strukturen (210) der mindestens zwei Strukturbereiche (21) sich unterscheiden.

6. Beleuchtungsvorrichtung nach einem der Ansprüche 1 bis 5, **dadurch gekennzeichnet, dass** die Beleuchtungsvorrichtung (2) mindestens einen Reflektor (27) umfasst und der Reflektor (27) zu dem Lichtleiter (20) so angeordnet ist, dass der mindestens eine Strukturbereich (21) dem Reflektor (27) zugewandt ist.

7. Beleuchtungsvorrichtung nach einem der Ansprüche 1 bis 5, **dadurch gekennzeichnet, dass** die Beleuchtungsvorrichtung (2) einen Reflektor (27) umfasst und der Reflektor (27) zu dem Lichtleiter (20) so angeordnet ist, dass der mindestens eine Strukturbereich (21) dem Reflektor (27) abgewandt ist.

8. Beleuchtungsvorrichtung nach einem der Ansprüche 1 bis 7, **dadurch gekennzeichnet, dass** der Lichtleiter (20) einen rechteckigen, einen runden oder einen ovalen Querschnitt aufweist.

9. Beleuchtungsvorrichtung nach einem der Ansprüche 1 bis 8, **dadurch gekennzeichnet, dass** die Struktur (210) in dem Strukturbereich (21) durch Ätzen Fräsen oder Strahlen in den Lichtleiter (20) eingebracht ist und vorzugsweise zumindest ein Teil der Bereiche, in denen keine Struktur vorgesehen ist, poliert ist.

10. Gargerät, **dadurch gekennzeichnet, dass** dieses zumindest eine Beleuchtungsvorrichtung gemäß einem der Ansprüche 1 bis 9 aufweist und vorzugsweise der mindestens eine Lichtleiter (20) zur Abdeckung einer Aufnahme (12) für zumindest den Lichtleiter (20) dient.

11. Gargerät nach Anspruch 10, **dadurch gekennzeichnet, dass** zumindest ein Lichtleiter (20) mindestens zwei Strukturbereiche (21) aufweist und jeder der mindestens zwei Strukturbereiche (21) in einer anderen Garebene des Gargerätes (1) liegt als der oder die weiteren Strukturbereiche (21).
